# EUROPÄISCHE PATENTANMELDUNG

(11) **EP 1 772 709 A2**
(43) Veröffentlichungstag der Anmeldung: **11.04.2007**
(21) Anmeldenummer: 06121475.5
(22) Anmeldetag: 29.09.2006
(51) Int. Cl.: G01F 9/00, D21F 5/00

(54) **Messvorrichtung, insbesondere zur Messung von Entwässerungsmengen von Papiermaschinen**

(30) Priorität: 07.10.2005 DE 102005048053
(71) Anmelder: Voith Paper Patent GmbH, 89522 Heidenheim (DE)
(72) Erfinder: Petersen, Jennifer, 89522, Heidenheim (DE); Ramsayer, Timo, 89551, Koenigsbronn (DE); Schaefer, Andreas, 89522, Heidenheim (DE); Strempfl, Christoph, 89542, Herbrechtingen (DE)
(74) Vertreter: Kunze, Klaus

(57) **Zusammenfassung**

Die Erfindung betrifft eine Messvorrichtung zur Volumenstrommessung von Flüssigkeiten, insbesondere für die Messung von Entwässerungsmengen bei Papiermaschinen, mit einem Behälter zur Aufnahme einer Flüssigkeit, deren Volumenstrom gemessen werden soll, wobei der Behälter einen Boden aufweist, auf welchem sich die Flüssigkeit ansammelt, mit einem Zulauf für die Flüssigkeit und einem Ablauf für die Flüssigkeit, wobei in den Ablauf eine Messblende eingebracht ist, welche eine Öffnung für den Austritt von Flüssigkeit aus dem Behälter aufweist. Die Messblendenöffnung erstreckt sich in vertikaler Richtung in dem Behälter nach oben, beginnend auf einem Überlaufniveau mit einem vorgegebenen Abstand oberhalb des Behälterbodens. Die Messvorrichtung weist ferner einen Drucksensor auf, der im oder am Behälter wenigstens teilweise unterhalb der Messblendenöffnung angeordnet ist, um den statischen Druck in einer sich im Behälter durch Zulauf der Flüssigkeit ansammelnden Flüssigkeitssäule zu messen.

Die erfindungsgemäße Messvorrichtung ist dadurch gekennzeichnet, dass ein unterer Bereich der Messblendenöffnung verschließbar ist, um das Überlaufniveau zur Überprüfung der Kalibrierung der Messvorrichtung um ein vorgegebenes Ausmaß zu erhöhen.

## Beschreibung

Die Erfindung betrifft allgemein eine Messvorrichtung zur Volumenstrommessung von Flüssigkeiten und ein Verfahren zur Überprüfung der Kalibrierung einer solchen Vorrichtung. Insbesondere betrifft die Erfindung eine Messvorrichtung für die Messung von Entwässerungsmengen bei Papiermaschinen, wobei solche Messvorrichtungen auch als Messkasten bezeichnet werden.

Bei der Papierherstellung sind Entwässerungen der Papierbahn an verschiedensten Stellen der Papiermaschine notwendig, beispielsweise im Bereich der Siebpartie, der Pressenpartie oder der Trockenpartie. Für den Papiermacher ist es dabei wichtig, die Entwässerungsmengen, das heißt den Volumenstrom der entwässerten Flüssigkeit, zu kennen.

Bisher kommen zur Messung solcher Entwässerungsmengen sogenannte Messkästen zum Einsatz, welche die anfallende Flüssigkeit bis zu einer Art Wehr beruhigen, darüber zu einem unter dem Messkasten sitzenden Drucksensor führen und über eine vorne am Messkasten angeordnete Blende die Flüssigkeit ohne jegliche Zwischenspeicherung wieder abgeben. Als Messaufnehmer oder allgemein Volumensensoren kommen berührungslose sowie berührende Messaufnehmer in Betracht, beispielsweise Zahnräder, welche durch den Flüssigkeitsstrom gedreht werden, wobei die Drehung durch einen magnetoresistiven Aufnehmer erfasst, verstärkt und als Impuls ausgegeben wird.

Als Nachteil der herkömmlich verwendeten Messkästen ist anzusehen, dass sie schlecht zu reinigen sind, zur Überprüfung der Kalibrierung Fachpersonal aus dem Bereich der Elektrotechnik erforderlich ist, und ihr Messbereich aufgrund des wenig flexiblen Aufbaus starr ist.

Der Erfindung liegt die Aufgabe zugrunde, eine verbesserte Messvorrichtung zur Volumenstrommessung von Flüssigkeiten sowie ein Verfahren zur Überprüfung der Kalibrierung für eine solche Messvorrichtung anzugeben. Insbesondere soll die erfindungsgemäße Messvorrichtung eine einfache Überprüfung der Kalibrierung ermöglichen, die auch ohne die Hilfe von elektrotechnischem Fachpersonal ausgeführt werden kann, und sie soll sich durch einen flexiblen Aufbau, der leicht an den spezifischen Einsatzort beziehungsweise die anfallende Flüssigkeitsmenge angepasst werden kann, auszeichnen.

Die erfindungsgemäße Aufgabe wird durch eine Messvorrichtung mit den Merkmalen von Anspruch 1 und ein Kalibrierverfahren gemäß dem Anspruch 11 gelöst. Die Unteransprüche beschreiben vorteilhafte und besonders zweckmäßige Ausgestaltungen der Erfindung.

Die erfindungsgemäße Messvorrichtung, welche insbesondere zur Messung von Entwässerungsmengen aus Papiermaschinen ausgeführt oder ein Teil einer Papiermaschine ist, umfasst einen Behälter zur Aufnahme der Flüssigkeit, deren Volumenstrom gemessen werden soll. Der Behälter weist einen Behälterboden auf, wobei die Flüssigkeit derart im Behälter angesammelt wird, dass sie eine Flüssigkeitssäule, welche auf dem Behälterboden steht, ausbildet.

Dementsprechend weist der Behälter einen Zulauf für die Flüssigkeit auf, welcher insbesondere im oberen Bereich des Behälters angeordnet ist und ein Fallrohr umfassen kann, das heißt ein senkrecht oder im wesentlichen senkrecht angeordnetes Rohr, mit welchem die Flüssigkeit in den Behälterinnenraum eingeleitet wird. Das Fallrohr kann dabei durch einen Deckel des Behälters, welcher vorteilhaft mit wenigstens einer Öffnung versehen ist, durchgeführt sein und mit einem vorgegebenen Abstand in unmittelbarer Nähe zu dem Behälterboden, beispielsweise im unteren Viertel des Behälters, enden beziehungsweise in dem Innenraum des Behälters münden.

Der Behälter weist ferner einen Ablauf für die Flüssigkeit auf, in welchen eine Messblende eingebracht ist. Die Messblende weist eine Öffnung auf, durch welchen die Flüssigkeit aus dem Behälter austritt. Die Messblendenöffnung erstreckt sich in vertikaler Richtung in dem Behälter, beispielsweise in Form eines Rechteckes, insbesondere eines stehenden Rechteckes, das heißt eines Rechteckes, das höher als breiter ist. In diesem Zusammenhang ist zu bemerken, dass die Messblendenöffnung selbstverständlich auch andere Formen aufweisen kann. Die Messblende beziehungsweise die Messblendenöffnung bildet somit einen Überlauf, beginnend auf einem vorgegebenen Überlaufniveau aus. Ab dem Überlaufniveau, welches mit einem vorgegebenen Abstand oberhalb des Behälterbodens positioniert ist, beginnt bei einem fortdauernden Einleiten von Flüssigkeit in den Behälter die Flüssigkeit durch die Messblendenöffnung aus dem Behälter herauszulaufen. Jenseits der Messblende, das heißt außerhalb des Behälters oder außen an demselben ist vorteilhaft ein Auffangbehälter oder allgemein eine Auffangeinrichtung vorgesehen, um die überlaufende Flüssigkeit einzufangen und/oder abzuleiten.

Wenn nun Flüssigkeit in den Behälter eingeleitet wird, solange dieser leer oder nur wenig gefüllt ist, das heißt, wenn sich die Wassersäule noch nicht bis zur Messblendenöffnung erstreckt, so geschieht folgendes:
Die Flüssigkeit, welche beispielsweise insbesondere über das oben beschriebene Fallrohr in den Behälter eingeleitet wird, gelangt in den unteren Teil des Behälters, wo sie aufgrund des gegenüber dem Querschnitt des Fallrohres deutlich vergrößerten Querschnitt des Behälters, in welchem sie aufsteigt, die Möglichkeit hat, sich zu beruhigen, das heißt ihre Strömungsgeschwindigkeit wird aufgrund der Querschnittserweiterung vermindert. Die Flüssigkeit sammelt sich über dem gesamten Querschnitt des Behälters und steigt in diesem mit andauernder Flüssigkeitszufuhr in Form einer Flüssigkeitssäule an, bis der Flüssigkeitspegel das Überlaufniveau, das heißt die untere Kante der Messblendenöffnung, erreicht. Bei weiter anhaltender Flüssigkeitszufuhr beginnt die Flüssigkeit nun, über die Messblendenöffnung aus dem Behälter auszuströmen, wobei der Flüssigkeitspegel solange weiter ansteigt, bis der aus der Messblendenöffnung ausströmende Flüssigkeitsvolumenstrom dem über das Fallrohr oder allgemein dem Zulauf einströmenden Flüssigkeitsvolumenstrom entspricht. Bei einem Gleichgewicht zwischen dem einströmenden Flüssigkeitsvolumenstrom und dem ausströmenden Flüssigkeitsvolumenstrom bleibt der Flüssigkeitspegel stationär im Bereich der Messblendenöffnung, vorteilhaft mit einem vorgegebenen Abstand unterhalb von deren oberen Ende.

Die erfindungsgemäße Messvorrichtung weist einen Drucksensor auf, der im oder am Behälter wenigstens teilweise unterhalb der Messblendenöffnung, vorteilhaft vollständig unterhalb des unteren Endes der Messblendenöffnung, angeordnet ist, um den statischen Druck der sich im Behälter angesammelten Flüssigkeitssäule, welche insbesondere unmittelbar gegen den Drucksensor, beispielsweise eine Membran, drückt, zu messen. Wenn sich nun, wie dargestellt, der Flüssigkeitspegel konstant eingestellt hat, wird auch ein konstanter Druck mittels des Drucksensors erfasst, aus welchem der Volumenstrom der in die Messvorrichtung eintretenden Flüssigkeit ermittelt werden kann.

Die erfindungsgemäße Messvorrichtungen misst insbesondere ausschließlich den statischen Druck der Flüssigkeitssäule, der sich in Abhängigkeit der Säulenhöhe einstellt, wobei die letztere wiederum durch das Verhältnis von zulaufendem und ausströmenden Flüssigkeitsvolumen bestimmt wird. Sobald auch nur kurzzeitig ein stationärer Zustand, abgesehen von Druckschwankungen besonders im Zulauf, der Flüssigkeitssäulenhöhe, das heißt des Flüssigkeitspegels, erreicht ist, ist es möglich, allein aus dem statischen Druck der Flüssigkeitssäule, bei bekanntem Querschnitt der wirksamen Messblendenöffnung das pro Zeiteinheit zulaufende und gleichzeitig ablaufende Flüssigkeitsvolumen zu bestimmen.

Zur Überprüfung der Kalibrierung der Messvorrichtung ist der untere Bereich der Messblendenöffnung verschließbar, um ein vorgegebenes maximales Überlaufniveau zu simulieren, welches oberhalb von dem Überlaufniveau der Unterkante der Messblendenöffnung liegt. Durch Verschließen des unteren Bereiches der Messblendenöffnung kann somit ein Überlaufniveau oberhalb der Unterkante der Messblendenöffnung genau definiert werden, ohne einen Einfluss von Volumenstromschwankungen im Zulauf oder Ablauf der Flüssigkeit in den Behälter beziehungsweise aus demselben heraus.

Nun kann der Behälter solange mit Flüssigkeit befüllt werden bis die Überlaufkante auf dem definierten maximalen Überlaufniveau erreicht beziehungsweise gerade überschritten wird, das heißt bis die Flüssigkeit beginnt, über die Messblendenöffnung aus dem Behälter auszuströmen. Mittels des Drucksensors kann der statische Druck der zugehörigen Flüssigkeitssäule gemessen werden und somit zur Überprüfung der Kalibrierung der Messvorrichtung dienen.

Nach der Überprüfung der Kalibrierung wird die Messblendenöffnung zum Messbetrieb der Messvorrichtung wieder vollständig geöffnet, beispielsweise indem eine zuvor die Messblendenöffnung im unteren Bereich überdeckende Stauplatte wieder entfernt wird. Die Stauplatte kann beispielsweise innerhalb der Messblendenöffnung von oben nach unten verschiebbar angeordnet sein oder anderweitig in den unteren Bereich der Messblendenöffnung hinein- und aus diesem herausbewegbar sein, sodass die Messblendenöffnung entweder vollständig frei ist oder deren unterer Bereich durch die Stauplatte verschlossen ist.

Nach einem weiteren und zum Anspruch 1 unabhängigen Aspekt der Erfindung umfasst der Zulauf der Messvorrichtung ein sich im Behälter im wesentlichen vertikal erstreckendes Fallrohr mit einer unterhalb der Messblendenöffnung angeordneten unteren Öffnung aus der die Flüssigkeit in den Behälter geleitet werden kann. Bei Zulauf der Flüssigkeit in den Behälter wird die untere Öffnung des Fallrohrs aufgrund der sich aufbauenden Wassersäule im Behälter eingetaucht. Hierdurch wird ein Wasserschloss im Behälter gebildet. Ein solches Wasserschloss hat die Funktion, Druckschwankungen im Zulauf zu dämpfen, und ermöglicht insbesondere die Messung von Flüssigkeitsvolumenströmen aus vakuumbeaufschlagten Leitungen. Durch Vorsehen eines freien Flüssigkeitspegels, welcher im Behälter der Messvorrichtung ansteigen und abfallen kann und der eine Wassersäule, in welche das Fallrohr eingetaucht ist, begrenzt, wird eine vakuumdichte Abdichtung des Fallrohres beziehungsweise des Zulaufes erreicht. Gleichzeitig werden Druckschwankungen im Zulauf durch das Ansteigen und Absinken des Wasser-pegels im Behälter gedämpft.

Die erfindungsgemäße Messvorrichtung ist vorteilhaft angepasst, um verschiedene Messaufnehmer austauschbar aufzunehmen. Ferner ist auch die Messblende vorteilhaft austauschbar, insbesondere in einem oberen Abschnitt des Behälters, an diesem befestigt. Somit kann die Messvorrichtung mit verschiedenen Messaufnehmern und/oder Blenden für verschiedene Durchflussmessungen sehr flexibel ausgerüstet werden.

Im Gegensatz zum Stand der Technik kann die Kalibrierung der erfindungsgemäßen Messvorrichtung ohne Ausbau des Druckaufnehmers beziehungsweise Drucktransmitters und ohne Zuhilfenahme eines Elektrikers überprüft werden. Insbesondere durch Anbringen einer Stauplatte über der Messblende kann bei Maschinenstillstand die Messblendenöffnung verschlossen, der Behälter bis zu einem vorgegebene Wert aufgefüllt, der zugehörige Druck gemessen und vorteilhaft anhand einer vorgesehenen zum Beispiel digitalen Anzeige geprüft werden, welcher Wert angezeigt wird und welcher Wert nach der Theorie angezeigt werden müsste. Bei Abweichungen kann eine entsprechende Kalibrierung leicht eingeleitet werden.

In Abhängigkeit von der anfallenden Flüssigkeitsmenge, insbesondere Wassermenge, kann eine geeignete Messblende aus einer Vielzahl vorgesehener Messblenden eingesetzt werden.

Die Erfindung soll nachfolgend anhand eines Ausführungsbeispiels exemplarisch beschrieben werden.

Es zeigen:
- Figur 1: einen schematischen Querschnitt einer Seitenansicht einer erfindungsgemäß ausgeführten Messvorrichtung;
- Figur 2: eine Ansicht entsprechend der Figur 1 um einen Winkel von 90 Grad versetzt, das heißt in der Figur 1 von der rechten Seite aus gesehen.

Die in den Figuren dargestellte Messvorrichtung umfasst einen Behälter 1 mit einem Behälterboden 2. Der Behälterboden 2 ist schräg angeordnet, so dass er ein Gefälle aufweist, welches die Flüssigkeit im Behälter 1 zu jener Seitenwand hin leitet, an dessen unteren Ende eine zusätzliche Ablauföffnung 11 vorgesehen ist, in welcher ein Kugelhahn 12 mündet. Somit ist es möglich, den Behälter 1 durch Öffnen des Kugelhahnes 12 vollständig zu entleeren.

In den Behälter 1 ist ein Fallrohr 10 eingetaucht, welches, wie man sehen kann, unmittelbar oberhalb des Behälterbodens 2 endet. Das Fallrohr 10 stellt den Zulauf 3 dar, durch welchen die Flüssigkeit, insbesondere Wasser, dessen Volumenstrom gemessen werden soll, in den Behälter 1 eingeleitet wird.

Im normalen Betriebszustand einer Messung ist der Kugelhahn 12 geschlossen, so dass das in den Behälter 1 einströmende Wasser sich auf dem Behälterboden 2 ansammelt und eine Wassersäule ausbildet, die im Behälter 1 ansteigt. Druckschwankungen im Zulauf 3 können durch ein entsprechendes Angleichen der Höhe der Wassersäule im Behälter 1 ausgeglichen werden, siehe den Doppelpfeil 19, ohne dass die Gefahr besteht, dass Luft in das untere Ende des Fallrohres 10 von außen eindringt, so dass stets eine vakuumdichte Abdichtung des Zulaufes 3 sichergestellt ist, wodurch auch Flüssigkeitsvolumenströme aus vakuumbeaufschlagten Leitungen gemessen werden können.

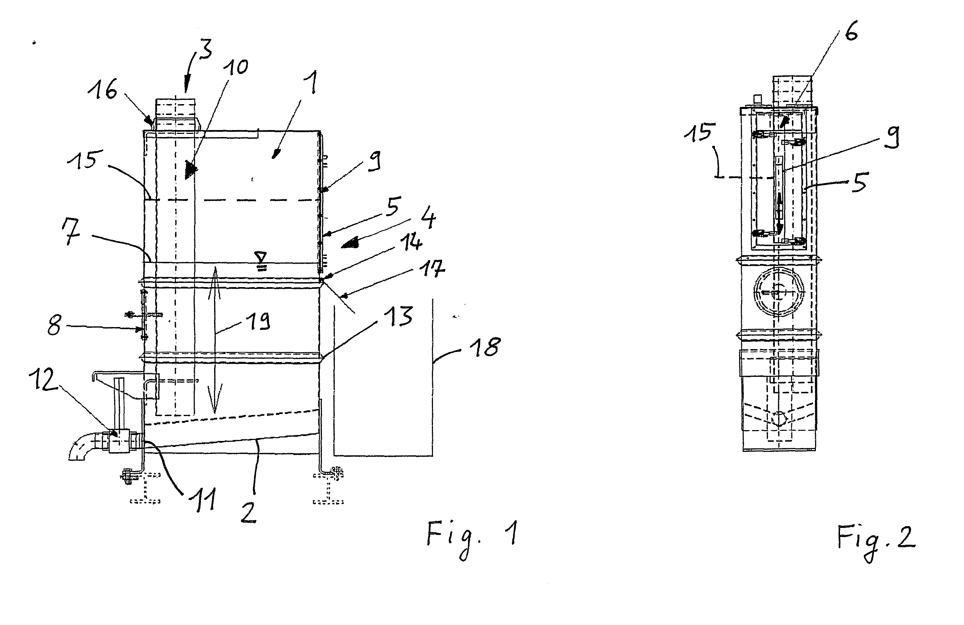

Der Flüssigkeitspegel steigt bei einem anhaltenden Volumenstrom durch den Zulauf 3 im Behälter 1 an, bis der zulaufende Volumenstrom in ein Gleichgewicht mit einem ablaufenden Volumenstrom gelangt. Der ablaufende Volumenstrom tritt dabei über die Messblendenöffnung 6 der seitlich in der Behälterwand vorgesehenen Messblende 5 aus, welche, wie man in der Figur 2 erkennen kann, einen rechteckigen Querschnitt aufweist. Mit steigendem Wasserpegel im Behälter 1 wird somit der Ablaufquerschnitt des ablaufenden Flüssigkeitsstromes linear proportional vergrößert, bis der Zustand erreicht wird, in welchem der ablaufende Volumenstrom dem zulaufenden Volumenstrom entspricht.

Mit Ausnahme des zusätzlichen Ablaufes 11, dessen Funktion später noch erläutert wird, ist der Ablauf 4 über die Messblendenöffnung 6 der einzige Ablauf im Behälter 1. Das Wasser aus dem Ablauf 4 strömt in den Sammelbehälter 18, wie durch die Rampe 17 angedeutet ist.

Durch die Unterkante der Messblendenöffnung 6 wird ein Überlaufniveau 7 definiert, das heißt das Niveau oder die Höhe des Flüssigkeitspegels innerhalb des Behälters 1, ab welchem die Flüssigkeit beginnt, über den Ablauf 4 beziehungsweise die Messblendenöffnung 6 abzulaufen.

In dem Moment, in welchem der Flüssigkeitspegel im Behälter 1 eine stationäre oder im wesentlichen stationäre Position einnimmt, vorteilhaft ohne Berücksichtigung von Druckschwankungen im Zulauf 3, kann der Volumenstrom der in den Behälter 1 einströmenden Flüssigkeit über den statischen Druck in der Wassersäule bestimmt werden, welcher durch den Drucksensor 8, der unterhalb der Messblende 5, vorliegend in der entgegengesetzten Seitenwand des Behälters 1, vorgesehen ist. Mit zunehmender Höhe der Flüssigkeitssäule in dem Behälter 1, das heißt mit zunehmender Stauhöhe, steigt der vom Drucksensor 8 erfasste statische Druck an, so dass der Staudruck proportional zu dem Volumenstrom der Flüssigkeit durch die Messvorrichtung ist.

Um die Kalibrierung der Messvorrichtung zu überprüfen, ist eine Stauplatte 9 vorgesehen, welche in den unteren Bereich der Messblendenöffnung 6 einbringbar ist, um diesen unteren Bereich, beginnend an der Unterkante der Messblendenöffnung 6, flüssigkeitsdicht zu verschließen. In der vorliegenden Ausführungsform ist die Stauplatte 9 mittels sog. Schnellverschlüssen abnehmbar an der am Behälter 1 befestigbar. Alternativ dazu könnte die Stauplatte 9 in Form eines Schiebers ausgeführt sein, der aus einer inaktiven Position, in der die Messblendenöffnung 6 völlig frei ist, d.h. in welcher ein Ausströmen von Flüssigkeit durch die Messblendenöffnung 6 nicht behindert, in eine untere Position (aktive Position) verschiebbar ist, wobei er in der letzteren das minimale Überlaufniveau 7 der Messvorrichtung, welches durch die Unterkante der Messblendenöffnung 6 bestimmt wird, auf ein darüber liegendes Überlaufniveau 15, welches durch die Oberkante des vollständig nach unten geschobenen Schiebers bestimmt wird, erhöht. Der Behälter 1 kann somit bis zu dem Überlaufniveau 15 mit Flüssigkeit befüllt werden und der zugehörige Druckwert mittels des Drucksensors 8 bestimmt werden, beispielsweise durch Ablesen einer vorgesehenen Anzeige (nicht dargestellt).

Nach der Überprüfung der Kalibrierung wird die Stauplatte 9 wieder vom Behälter 1 abgenommen, so dass die Messblendenöffnung 6 völlig frei ist.

Der Behälter 1 kann einen gegenüber der Umgebung geöffneten Innenraum aufweisen. In der gezeigten Ausführung weist der Behälter 1 einen Deckel auf, welcher mittels eines Griffs zur Reinigung geöffnet werden kann.

Der Kugelhahn 12 dient der Reinigung der Messvorrichtung beziehungsweise des Behälters 1. Über einen weiteren nicht dargestellten Zulauf, der bspw. die Spülleitung des Drucksensors 8 oder eine Zuleitung im Behälter 1 umfassen kann, kann der Behälter 1 insbesondere zu einer Zeit ohne Messwerterfassung, mit Wasser gefüllt und gleichzeitig oder anschließend der Kugelhahn 12 geöffnet werden, so dass das Wasser über diesen aus dem Behälter 1 ablaufen kann. Hierbei erfolgt eine Reinigung des Innenraumes des Behälters 1 und zugleich des Drucksensors 8.

Im unteren Abschnitt der Seitenwand ist der zusätzliche Ablauf 11 mit dem Kugelhahn 12 sowie selbstverständlich der schräge Behälterboden 2 angeordnet. Im mittleren Abschnitt der Seitenwand ist der Drucksensor 8 positioniert. Im oberen Abschnitt der Seitenwand ist die Messblende 5 angeordnet sowie an dem Deckel auf dem oberen Abschnitt der Seitenwand das Fallrohr 10 befestigt, welches über den mittleren Abschnitt hinaus bis in den unteren Abschnitt der Seitenwand reicht.

Ist der Behälter 1 mehrteilig ausgeführt, so ist es durch diesen modulartigen Aufbau möglich, verschiedene Seitenwandabschnitte für bestimmte Einsatzzwecke, insbesondere in Abhängigkeit der erwarteten anfallenden Flüssigkeitsmenge, zu einem einzigen Behälter zu kombinieren. Beispielsweise kann eine Reihe von mittleren Seitenwandabschnitten mit verschiedenen Messaufnehmern beziehungsweise Drucksensoren 8 bereitgehalten werden. Ebenso kann eine Vielzahl von oberen Abschnitten mit verschiedenen Fallrohren 10 und/oder Messblenden 5, die sich insbesondere durch die Größe und die Form der Messblendenöffnung 6 unterscheiden, bereitgehalten werden. Auch die vertikalen Ausmaße der jeweiligen Seitenwandabschnitte können variieren, so dass für den jeweiligen Einsatzzweck ein geeigneter Behälter mit dem optimalen Drucksensor 8, der optimalen Messblende 5 sowie der optimalen Höhe des Gesamtbehälters beziehungsweise der einzelnen Abschnitte schnell und kostengünstig zusammengefügt werden kann, ohne dass ein Einbau von Drucksensoren und/oder Messblenden in die Seitenwände erforderlich ist, was mit einem komplizierten Abdichtvorgang verbunden sein kann.

## Patentansprüche

1. Messvorrichtung zur Volumenstrommessung von Flüssigkeiten, insbesondere für die Messung von Entwässerungsmengen bei Papiermaschinen, mit einem Behälter (1) zur Aufnahme einer Flüssigkeit, deren Volumenstrom gemessen werden soll, wobei der Behälter (1) einen Boden (2) aufweist, auf welchem sich die Flüssigkeit ansammelt; mit einem Zulauf (3) für die Flüssigkeit und einem Ablauf (4) für die Flüssigkeit, wobei in den Ablauf (4) eine Messblende (5) eingebracht ist, welche eine Öffnung (6) für den Austritt von Flüssigkeit aus dem Behälter (1) aufweist; die Messblendenöffnung (6) erstreckt sich in vertikaler Richtung in dem Behälter (1) nach oben, beginnend auf einem Überlaufniveau (7) mit einem vorgegebenen Abstand oberhalb des Behälterbodens (2); mit einem Drucksensor (8), der im oder am Behälter (1) wenigstens teilweise unterhalb der Messblendenöffnung (6) angeordnet ist, um den statischen Druck in einer sich im Behälter (1) durch Zulauf der Flüssigkeit ansammelnden Flüssigkeitssäule zu messen;
**dadurch gekennzeichnet, dass**
ein unterer Bereich der Messblendenöffnung (6) verschließbar ist, um das Überlaufniveau (7) zur Überprüfung der Kalibrierung der Messvorrichtung um ein vorgegebenes Ausmaß zu erhöhen.

2. Messvorrichtung gemäß Anspruch 1, **dadurch gekennzeichnet, dass** eine abnehmbare oder bewegbare Stauplatte (9) im Bereich der Messblende (5) vorgesehen ist, mittels welcher der untere Bereich der Messblendenöffnung (6) verschließbar ist.

3. Messvorrichtung gemäß einem der Ansprüche 1 oder 2, **dadurch gekennzeichnet, dass** der Zulauf (3) ein Fallrohr (10) umfasst, welches senkrecht oder im wesentlichen senkrecht im Behälter (1) angeordnet ist, und eine Auslassöffnung aufweist, die unterhalb des Drucksensors (8) und/oder der Messblendenöffnung (6), insbesondere unmittelbar oberhalb des Behälterbodens (2), im Behälter (1) mündet.

4. Messvorrichtung gemäß einem der Ansprüche 1 bis 3, **dadurch gekennzeichnet, dass** am unteren Ende des Behälters (1), insbesondere in einer Seitenwand auf der Höhe des Behälterbodens (2) oder im Behälterboden (2) eine zusätzliche Ablauföffnung (11) vorgesehen ist, welche insbesondere mit einem Kugelhahn (12) oder einem Absperrschieber verschließbar ist.

5. Messvorrichtung gemäß einem der Ansprüche 1 bis 4, **dadurch gekennzeichnet, dass** der Behälterboden (2) ein Gefälle aufweist, in dessen tiefsten Punkt insbesondere die zusätzliche Ablauföffnung (11) mündet.

6. Messvorrichtung gemäß einem der Ansprüche 1 bis 5, **dadurch gekennzeichnet, dass** die Messblendenöffnung (6) einen rechteckigen Querschnitt aufweist, insbesondere in Form eines stehenden Rechteckes.

7. Messvorrichtung gemäß einem der Ansprüche 1 bis 6, **dadurch gekennzeichnet, dass** die Messblende (5) in einem oberen Abschnitt des Behälters (1) austauschbar an diesem befestigt ist.

8. Messvorrichtung gemäß einem der Ansprüche 1 bis 7, **dadurch gekennzeichnet, dass** der Behälter (1) eine den Innenraum des Behälters umschließende Seitenwand mit einem unteren Abschnitt, einem mittleren Abschnitt und einem oberen Abschnitt aufweist, und dass im mittleren Abschnitt der Drucksensor (8) und im oberen Abschnitt die Messblende (5) angeordnet ist.

9. Messvorrichtung gemäß den Ansprüchen 3 und 8, **dadurch gekennzeichnet, dass** das Fallrohr (10) im unteren Abschnitt mündet.

10. Messvorrichtung gemäß einem der Ansprüche 8 oder 9, **dadurch gekennzeichnet, dass** der untere Abschnitt mit dem mittleren Abschnitt und /oder der mittlere Abschnitt mit dem oberen Abschnitt lösbar und austauschbar gegen abweichend gestaltete Abschnitte, insbesondere mit jeweils einem anderen Drucksensor (8) und/oder einer anderen Messblende (5) und/oder mit einem anderen vertikalen Ausmaß miteinander verbunden sind.

11. Verfahren zur Überprüfung der Kalibrierung einer Messvorrichtung gemäß einem der Ansprüche 1 bis 10, umfassend die folgenden Schritte:
11.1 der untere Bereich der Messblendenöffnung (6) wird bis zu einer vorgegebenen maximalen Überlaufhöhe (15) der Messblende (5) verschlossen;
11.2 die Flüssigkeit, deren Volumenstrom gemessen werden soll oder eine Ersatzflüssigkeit insbesondere mit denselben physikalischen Eigenschaften wird über den Zulauf (3) in den Behälter (1) eingeleitet, so dass sich auf dem Behälterboden (2) eine Flüssigkeitssäule ausbildet, die nach oben anwächst, bis sie die maximale Überlaufhöhe (15) erreicht, ab welcher die Flüssigkeit dann über die Messblendenöffnung (6) aus dem Behälter (1) ausströmt;
11.3 mittels des Drucksensors (8) wird der statische Druck der Flüssigkeitssäule gemessen und als Maximalwert kalibriert;
11.4 zum Betrieb der Messvorrichtung wird die Messblendenöffnung (6) wieder vollständig geöffnet.
